# EUROPEAN PATENT APPLICATION

(11) **EP 3 971 424 A1**
(43) Date of publication of application: **23.03.2022**
(21) Application number: 20196803.9
(22) Date of filing: 18.09.2020
(51) Int. Cl.: F15B 15/28, F15B 15/14, F16H 61/30, F16H 63/30

(54) **PNEUMATIC ACTUATOR WITH MAGNETIC POSITION SENSOR**

(71) Applicant: ZF CV Systems Europe BV, 1170 Brussels (BE)
(72) Inventor: Kisielewski, Waldemar, 50-515 Wroclaw (PL); Suski, Bartosz, 54-104 Wroclaw (PL)
(74) Representative: Rabe, Dirk-Heinrich

(57) **Abstract**

The invention relates to a pneumatic actuator (1) for actuating a functional element (2) comprising a pneumatic cylinder (4), the pneumatic cylinder (4) comprising a cylinder body (7) defining a pneumatic chamber (8) having a central axis (A), and a pneumatic piston (6) for actuating the functional element (2) comprising a piston head (12) and a piston rod (14). The piston head (12) is received in the pneumatic chamber (18) slidable along the central axis (A). The pneumatic actuator (1) further comprises a magnetic position sensor (64) for detecting a relative position of the pneumatic piston (6) and a magnet (66) attached to the pneumatic piston (6) for cooperation with the position sensor (64).The pneumatic actuator (1) is characterized in that the magnet (66) is point symmetrical to the central axis (A). The invention further relates to a gearbox (100) and a commercial vehicle (200).

## Description

The invention relates to a pneumatic actuator for actuating a functional element, in particular a functional element of a gearbox of a commercial vehicle, comprising a pneumatic cylinder, the pneumatic cylinder comprising a cylinder body defining a pneumatic chamber having a central axis, and a cylinder head closing the pneumatic chamber; a pneumatic piston for actuating the functional element, the pneumatic piston comprising a piston head, and a piston rod for connecting the piston head to a functional element, wherein the piston head is received in the pneumatic chamber slidable along said central axis, a magnetic position sensor for detecting a relative position of the pneumatic piston to the pneumatic cylinder, and a magnet attached to the pneumatic piston for cooperation with the position sensor.

In vehicles, in particular in commercial vehicles, there are multiple ways of implementing an automatic transmission. Besides automated gearboxes, automated manual transmission (AMT) systems are often used. AMT systems comprise a traditional manual transmission gearbox that is automatically actuated by one or more pneumatic actuators. The pneumatic actuators are connected to functional elements, for example to shifting forks. Upon actuation of the pneumatic actuator, a gear is shifted without a manual actuation of a gearshift lever by a vehicle driver.

Generally, pneumatic actuators comprise a pneumatic cylinder and a pneumatic piston. The pneumatic piston is movable relative to the pneumatic cylinder. Upon movement, the piston actuates the functional element connected to the piston. For initiating such a movement of the piston, a piston head is received in a pneumatic chamber defined by a cylinder body of the pneumatic cylinder. The pneumatic piston is slidably arranged in the pneumatic chamber and movable back and forth along a central axis of the pneumatic chamber. When a pressure in the pneumatic chamber is increased, the pneumatic piston is pushed in a positive stroke direction and a volume enclosed by the pneumatic piston and the pneumatic chamber is increased. A piston rod connected to the piston head protrudes out of the pneumatic chamber and actuates the functional element. When a pressure in the pneumatic piston is reduced below an ambient pressure level the piston moves into the pneumatic chamber performing a negative stroke in a negative stroke direction.

To reduce wear on gearbox components, actuation of the functional element connected to the pneumatic actuator needs to be precise. For automatically controlling the actuator, accurate information on a relative position of the piston with regard to the pneumatic cylinder is required. Therefore, pneumatic actuators comprise a position sensor for detecting a relative position of the pneumatic piston to the pneumatic cylinder. Magnetic position sensors are often of the Hall sensor type. The magnetic position sensor is adapted to detect a magnet cooperating with said sensor. If the distance of the magnet with regard to the magnet sensor changes, a corresponding signal is provided by the magnetic sensor. By attaching the magnet to the pneumatic piston, a relative position of the piston to the pneumatic cylinder can be derived from the sensor signal. The signal may be used to differentiate between multiple piston positions and/or may correspond to an exact distance between the magnet and the magnet position sensor.

Components of the actuator, in particular ferromagnetic components, arranged between the magnet and the sensors as well as a great distance between the magnet and the sensor have an influence on a signal strength and/or accuracy of the signal provided by the magnetic position sensor. By arranging the magnet on a peripheral surface of the piston head and the magnetic position sensor on a corresponding section of an outer wall of the cylinder body a distance between the magnet and the magnetic position sensor is kept small for conventional sensors. For receiving the magnet, the piston head comprises a cavity on the circumferential surface. The magnet is received in that cavity and protected therein. However, manufacturing of the cavity results in increased manufacturing cost. Moreover, exact positioning as well as assembly of the magnet is required in order to prevent a rubbing contact between the magnet and the cylinder. This results in increased assembly cost and an increased potential for functional and/or assembly errors. Generally, cost as well as reliability are of utmost importance for components in the automotive and commercial vehicle industry.

Therefore, it is an object of the invention to provide a cost efficient and reliable pneumatic actuator that is easy to assemble.

To solve this object, the present invention proposes in a first aspect that the magnet is point symmetrical to the central axis. A magnet point symmetrical to the central axis is preferably symmetrical in two dimensions. A distance of a point symmetrical magnet with regard to the magnetic position sensor is preferably constant for multiple angular orientation of the pneumatic piston. Hence, upon assembly of the pneumatic actuator multiple angular orientations of the pneumatic piston with regard to the pneumatic chamber are possible. A risk of incorrect assembly is decreased, since more than one orientation of the pneumatic piston with regard to the main axis is correct. Moreover, conventional and commercially available magnetic position sensors may still be used in this invention. The point symmetry of the magnet to the central axis depends on the shape of the magnet itself as well as the relative mounting position of the magnet to the central axis. A magnet may be point symmetrical in itself, for example cubic, but still not be point symmetrically arranged to the central axis. A symmetric axis of a point symmetrical magnet is coaxial to the central axis.

Preferably, the magnet is attached to the piston head of the pneumatic piston. A magnet attached to the piston head directly provides information on the position of the piston head with regard to the pneumatic cylinder. Therefore, controlling the pneumatic actuator is facilitated. However, the magnet may also be attached to the piston rod. For example, both the magnet and the magnetic position sensor may be arranged outside the pneumatic chamber.

The cylinder head is preferably removable from the cylinder body. A removable cylinder head facilitates assembly of the piston within the pneumatic chamber as well as sealing of the pneumatic chamber. However, the cylinder head may also be permanently fixed or integrally formed with the cylinder body. The cylinder may then comprise an access opening that is sealed by the piston head upon reception of the piston within the pneumatic chamber.

Preferably, the cylinder head and/or the cylinder body are made from aluminium. Aluminium further includes aluminium alloys. Compared to other conventional materials, in particular compared to steel, aluminium is not ferromagnetic and has a minor influence on the magnetic field provided by the magnet attached to the piston. Hence, a cylinder head and/or cylinder body made from aluminium allows an exact detection of the relative position of the pneumatic piston.

Preferably, the magnet is a permanent magnet, particularly preferred is a Neodymium, Bismanol and/or AlNiCo-based magnet. For instance, the magnet has a magnetic flux density of 1000 mT to 2000 mT, preferably 1200 mT to 1500 mT, further preferred 1300 mT to 1400 mT. The technical effect of this embodiment is, that the material chosen for the magnet enables achieving the magnetic flux density as mentioned, which results in an accurate determination of the position of the piston to which the magnet attached to. In accordance with an embodiment, the magnetic flux density of the magnet is determined using e.g., a gaussmeter in relation to the distance at which the effect of the flux density is to be experienced. In another embodiment, the magnetic flux density of the magnet is determined using one of Total Flux Test (Fluxmeter) and Hysterisis Test (Permeameter). Furthermore, based on the readings from the tests such as gaussmeter, the choice of the material, the shape of the magnet and other parameters be calibrated, chosen and/or adjusted.

In accordance with a preferred embodiment, the magnet used in the present invention has a "remanent" flux density within the range of 1300mT and 1400mT, and more preferably in the range of 1310 mT and 1350 mT at a room temperature of about 20 degrees Celsius. For instance, the term "remanent flux density" is generally defined as the value of the magnetic flux density remaining in a magnetized body ("magnet" in the present case) when, in the absence of a self-demagnetizing field, the applied magnetic field strength is brought to zero. The technical effect of this feature is that it allows one of the best possible attributes relevant for the pneumatic actuator used in association with e.g., the gearbox of the present invention.

In a first preferred embodiment, the magnet is rotationally symmetrical. The angular orientation of the piston has no influence on a relative orientation of a rotationally symmetrical magnet to the sensor. A possibility for incorrect angular assembly of the pneumatic piston is therefore eliminated by applying a magnet rotationally symmetrical to the central axis. Moreover, during operation of the pneumatic actuator the angular orientation of the pneumatic piston within regard to the pneumatic cylinder can change without influencing the detection of the position sensor. The need to provide dedicated alignment elements on the pneumatic piston is eliminated. Rotationally symmetrical magnets may for example be cylinder- or disc-shaped.

Preferably, the piston head comprises a first front face and a second front face and the magnet is preferably attached to the first front face of the piston head. The front faces are preferably substantially perpendicular to the main axis. By attaching the magnet to a front face, the need to machine a receiving portion on a peripheral surface of the pneumatic piston head is eliminated. Machining peripheral surfaces is generally cost intensive and therefore undesirable. Since recesses in a peripheral surface of the piston are not needed when the magnet is attached to a front face of the piston head, sealing of the pneumatic chamber by the pneumatic piston is facilitated. Moreover, the magnet is protected from rubbing against an inner surface of the pneumatic cylinder upon movement of the piston. Hence, arranging the magnet on a front face increases reliability and efficiency of the pneumatic actuator. Preferably, the first front face is oriented towards the cylinder head. In cooperation with the pneumatic chamber and the cylinder head, the first front face oriented towards the cylinder head defines a first volume of air between the pneumatic piston and the pneumatic cylinder.

In a preferred embodiment, the piston head comprises a mounting recess in the first front face and the magnet is at least partially received in the mounting recess. The magnet may still protrude beyond the front face, preferably towards the cylinder head. Particularly preferred, the magnet is fully received in the mounting recess. A magnet fully received in the mounting recess is effectively protected from damages. The mounting recess facilitates attachment of the magnet on the front face. A probability for incorrect assembly is reduced. Moreover, the magnet can be prevented from lateral movement by a sidewall of the mounting recess. Reliability of the pneumatic actuator is thereby increased and the magnet is prevented from loosening during operation of the pneumatic actuator. Preferably, an inner geometry of the mounting recess corresponds to an outer geometry of the magnet. For example, the recess may have a rectangular cross section perpendicular to the central axis while the magnet also has a substantially corresponding cross section. Preferably, an outer lateral surface of the magnet that is parallel to the central axis touches an inner wall of the recess. It shall be understood that even if the outer lateral surface of the magnet touches the inner wall of the recess, a small gap may be provided to facilitate assembly.

In a further preferred embodiment, the magnet is a ring magnet having a central orifice. Ring magnets are commercially available and can be procured at low cost. Moreover, an overall weight of a ring magnet is smaller and therefore lighter than disc-shaped magnets. A central magnet axis is defined by the central orifice and this central magnet axis is coaxial to the central axis of the pneumatic chamber.

Preferably, a connection member connecting the piston head to the piston rod extends through the central orifice of the ring magnet. Thereby the ring shape of the magnet allows for an easy assembly of the pneumatic piston. Moreover, the connection member is accessibly even after the magnet is attached. In case of a damage to the pneumatic piston and/or the magnet, repair and/or exchange of parts is facilitated and an overall reliability of the pneumatic actuator is increased. The pneumatic piston preferably is a two-part construction. The piston rod and the piston head can be manufactured independently which reduces material consumption and decreases manufacturing cost. Preferably, the piston head is screwed to the piston rod. The connection member then comprises one or more screws. Particularly preferred, the piston head is screwed to the piston rod from the first front face. A screw head of the screw preferably abuts the piston head. The connection member may also be or comprise a rivet. The piston rod may also be glued to the piston head. The piston rod can also comprise a threaded portion. In this case the connection member may then be a nut, locking ring and/or locking pin. Preferably, the connection member is integrally formed with the piston rod or piston head.

In a preferred embodiment, the ring magnet is attached to the piston head by means of the connection member. The connection member is then a multifunctional connection member attaching the piston head to the piston rod as well as the magnet to the piston head. Alignment of the ring magnet, the piston head and the piston rod is facilitated. It is also preferred that the ring magnet is attached to the piston head by a separate element. The connection member may also comprise multiple elements, such as screws, rivets and washers.

According to another preferred embodiment, the magnet is glued to the piston head. By gluing the magnet to the piston head a durable and easy fixation of the magnet is achieved. Generally gluing is a fast and cost efficient assembly method. Glue may compensate for deformations of the piston head and is long term reliable. Gluing is particularly preferred when the magnet is attached to a front face of the piston head. Since, a risk of the magnet rubbing against an inner surface of the pneumatic body is eliminated by attaching the magnet to the front face, an amount of glue provided for attaching the magnet to the piston head can be provided with less accuracy, which further facilitates assembly. A difference in a distance between the magnet and the magnetic position sensor along the central axis resulting from a less accurate dispensing of the glue can easily be compensated and therefore has no influence on an overall functionality of the sensor.

Preferably, a main sensor axis of the position sensor is parallel, particularly preferred coaxial, to the central axis of the pneumatic chamber. The main sensor axis is defined by a measurement direction of the magnetic position sensor. A parallel and/or coaxial arrangement of the main sensor axis and the central axis facilitates processing of a signal provided by the magnetic position sensor that corresponds to the position of the magnetic sensor. Preferably, the central axis extends through the sensor. Thereby the probability of misalignments is further reduced.

In a preferred embodiment, the position sensor is arranged on an outer portion of the cylinder head opposite the pneumatic chamber. By arranging the magnetic position sensor on an outer portion of the cylinder head, the risk for damages to the magnetic position sensor is reduced. Moreover, a position sensor arranged on the outer portion is easily accessible. Assembly is facilitated, since wires or cables connecting the position sensor to a control unit do not need to be run into the pneumatic chamber. The pneumatic cylinder head is preferably removable from the pneumatic chamber. The magnetic position sensor can then be attached to the piston head prior to an installation of the piston head in the pneumatic chamber which further facilitates correct alignment and assembly.

Preferably, the outer portion of the cylinder head comprises a sensor recess and the position sensor is at least partially received in the sensor recess. The sensor recess thereby facilitates correct positioning of the magnetic position sensor. When the position sensor is received in the recess, it is protected from damages by the surrounding cylinder head. Preferably, the recess is a rotationally symmetrical recess. The cylinder head may then be manufactured by turning, which is a cost efficient and accurate production method for rotationally symmetrical components. Preferably, an inner geometry of the sensor recess corresponds to an outer geometry of the position sensor. The cylinder head may further comprise a sensor cover, for covering the position sensor received in the sensor recess. The sensor cover further protects the position sensor from damages, in particular damages from moving elements, corrosive media and or heat.

According to a preferred embodiment, an outer peripheral surface of the piston head is continuous. A continuous outer peripheral surface does not comprise cavities. However, it shall be understood that a continuous outer peripheral surface may still comprise varying radii perpendicular to the central axis and/or steps. For example, a first peripheral face for attaching a first sealing element may have a smaller or larger radius than a second peripheral surface for receiving a second sealing element. Continuous outer peripheral surfaces can be manufactured at low cost with high accuracy.

In a further preferred embodiment, the piston rod is rotationally symmetrical, at least along a portion of it. Preferably, a first end of the piston rod opposite the piston head is symmetrical. A symmetrical piston rod eliminates the risk for misalignments during assembly. Since the magnet is symmetrical, no alignment elements, such as hooks or noses, are required at the piston rod of the piston head to ensure correct alignment of the magnet with regard to the magnetic position sensor. As such alignment elements require additional manufacturing steps, the point symmetrical magnet allows for a cost efficient piston rod design. Particularly a piston assembly comprising the pneumatic piston and the magnet is rotationally symmetrical.

According to a second aspect of the invention, the above stated problem is solved by a gearbox, in particular a gearbox for a commercial vehicle, comprising a pneumatic actuator according to any of the described embodiments according to the first aspect of the invention. Preferably, the cylinder body is integrally formed with a housing of the gearbox. However, pneumatic actuators attached to a housing of the gearbox via connection elements such as screws or rivets are also preferred. Moreover, the pneumatic cylinder may also be partially or fully welded to the housing of the gearbox. Particularly preferred the pneumatic actuator is received inside the housing of the gearbox. The pneumatic piston, other elements of the actuator or the functional element arranged in an interior of the gearbox do not penetrate the gearbox housing. Sealing of the gearbox housing is thereby facilitated and reliability is increased.

In a third aspect of the invention the above stated problem is solved by a commercial vehicle comprising a gearbox according to the second aspect of the invention. It shall be understood that the pneumatic actuator according to the first aspect of the invention, the gearbox according to the second aspect of the invention and the vehicle according to the third aspect of the invention preferably have similar or equal aspects, in particular as they are described in the dependent claims. Thus, reference is made to the above description of the pneumatic actuator according to the first aspect of the invention.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
- Figure 1: shows a cut view of a first embodiment of a pneumatic actuator;
- Figure 2: shows a cut view of a pneumatic actuator according to a second embodiment; and
- Figure 3: shows a commercial vehicle having a gearbox comprising a pneumatic actuator.

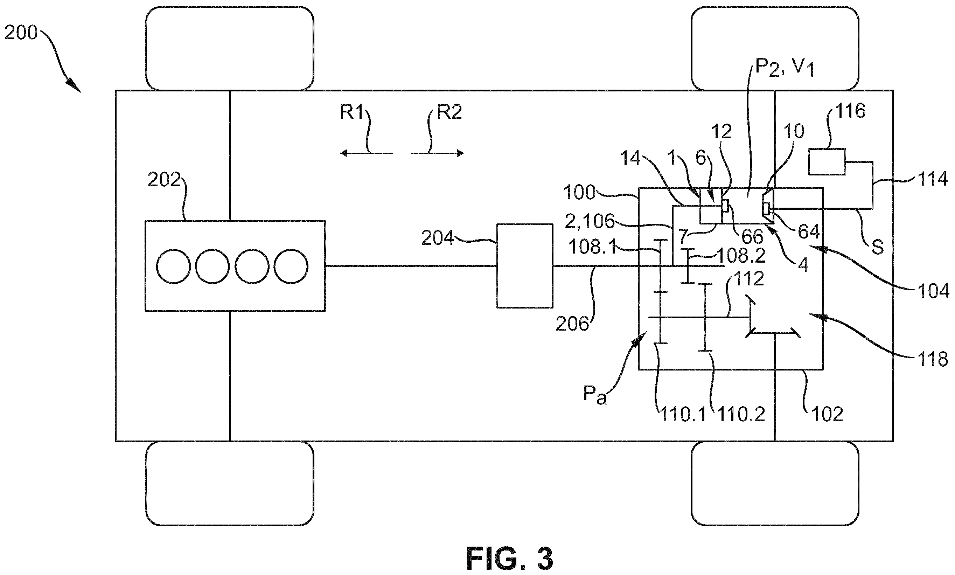

A pneumatic actuator 1, in particular a pneumatic actuator 1 for actuating a functional element 2 of a gearbox 100, comprises a pneumatic cylinder 4 and a pneumatic piston 6. A piston body 7 of the pneumatic cylinder 4 defines a pneumatic chamber 8, having a central axis A. On a first side 9, the pneumatic chamber 8 is closed by a cylinder head 10 of the pneumatic cylinder 4. The pneumatic cylinder 4 is integrally formed with a housing 102 of the gearbox 100. The pneumatic actuator 1 is received inside the gearbox 100 in an interior 104 (cf. also Figure 3).

A piston head 12 of the pneumatic piston 6 is received in the pneumatic chamber 8 of the pneumatic cylinder 4. The piston head 12 is connected to a piston rod 14 of the pneumatic piston 6 that extends through a cylinder orifice 15 of the pneumatic cylinder 4 on a second side 16 opposite the first side 9. The cylinder orifice 15 is formed in a bottom 18 of the cylinder body 7. A maximum outer diameter D1 of the piston head 12 is larger than a corresponding inner diameter D2 of the piston orifice 15. During assembly of the pneumatic actuator 1 the pneumatic piston 6 is inserted from the first side 9 through a head opening 20. After insertion of the pneumatic piston 6 the head opening 20 of the pneumatic chamber 8 is closed by the cylinder head 10. However, the inner diameter D2 may also correspond to the maximum outer diameter D2 such that the pneumatic piston 6 can be inserted into the pneumatic chamber 8 from the second side 16 through the piston orifice 15.

The piston head 12, the cylinder head 10 and an inner wall 22 of the cylinder body 7 enclose a first volume V1. For moving the pneumatic piston 6, a first pressure p1 is applied to the first volume V1. Opposite the first volume V1 a second volume V2 is defined in the pneumatic chamber 8. The second volume V2 is fluidly connected to the interior 104 of the gearbox 100 via a channel 17. If the first pressure p1 exceeds an ambient pressure pₐ of the interior 104, that also applies to the second volume V2, the first volume V1 is increased and the pneumatic piston 6 performs a positive stroke in a positive stroke direction R1. A bearing 62 guides the pneumatic piston 6 such that the positive stroke direction R1 is parallel to the central axis A. For performing a negative stroke of the pneumatic piston 6 in a negative stroke direction R2 opposite the positive stroke direction R1 a second pressure p2 lower than the ambient pressure pₐ is applied to the first volume V1. However, movement of the pneumatic piston 6 in the positive stroke direction R1 and/or the negative stroke direction R2 may also be achieved and/or assisted by a biasing member, such as a spring.

By applying varying pressures p1, p2 to the first volume V1, the pneumatic piston 6 is movable back and forth with regard to the pneumatic cylinder 4. On a first end 24 opposite the piston head 12, the piston rod 14 engages the functional element 2. The piston rod 14 transmits the movement of the piston head 12 to the functional element 2. When the pneumatic piston 6 performs a positive stroke in the positive stroke direction R1 the functional element 2 engaging the piston rod 14 is actuated and moved in the positive stroke direction R1 as well. During a negative stroke of the piston 6 in the negative stroke direction R2, the functional element 2 is also moved in the negative stroke direction R2.

For engaging the functional element 2, the piston rod 14 comprises a groove 26. In this embodiment and preferably groove 26 is a substantially u-shaped groove 26. Additionally or alternatively, the piston rod 14 may also comprise a radial projection (not shown) for engaging the functional element 2. The groove 26 extends along the entire circumference of the piston rod 14. However, the groove 26 may also extend only partially around the circumference of the piston rod 14.

The pneumatic piston 6 is a two-part construction. The piston head 12 and the piston rod 14 are manufactured independently and attached to each other upon assembly of the pneumatic piston 6. A connection member 27 attaches the piston head 12 to the piston rod 14. Here, the connection member 27 is a screw 28 having a shaft 30 and a screw head 32. The shaft 30 comprises an external thread 34 that is received in a corresponding internal thread 36 of a bore 38 in the piston rod 14. The shaft 30 extends through the piston head 12 while the screw head 32 abuts a first front face 40 of the piston head 12. In this embodiment, the first front face 40 is directed towards the cylinder head 10. Opposite the first front face 40, the piston head 12 comprises a second front face 42. Both the first front face 40 and the second front face 42 are perpendicular to the central axis A.

The piston rod 14 directly abuts the second front face 42 of the piston head 12. However, the piston head 12 may preferably also comprise a rod recess (not shown) for partially receiving the piston rod 14. The piston head 12 can be attached to the piston rod 14 and then the assembled pneumatic piston 6 can be inserted in the pneumatic cylinder 4 from the first side 9. Since, the piston rod 14 is removable connected to the piston head 12, it may also be inserted from the second side 16 before attaching it to the piston head 12. Depending on the layout of the gearbox 100, this may facilitate assembly. Hence, the two part-construction of the pneumatic piston 6 allows for a versatile arrangement. The same design of the pneumatic actuator 1 may be used for different gearbox designs.

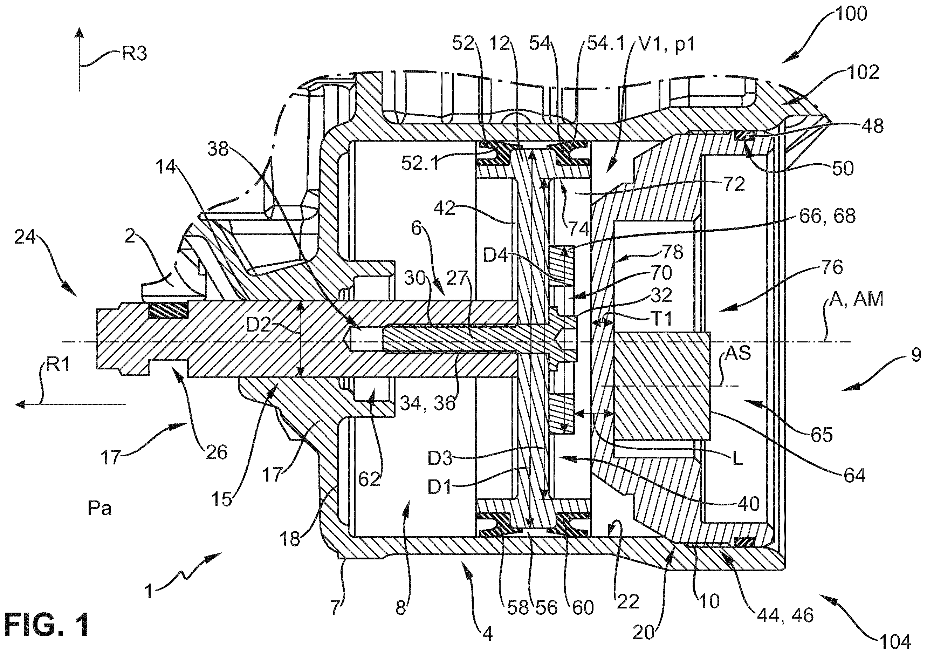

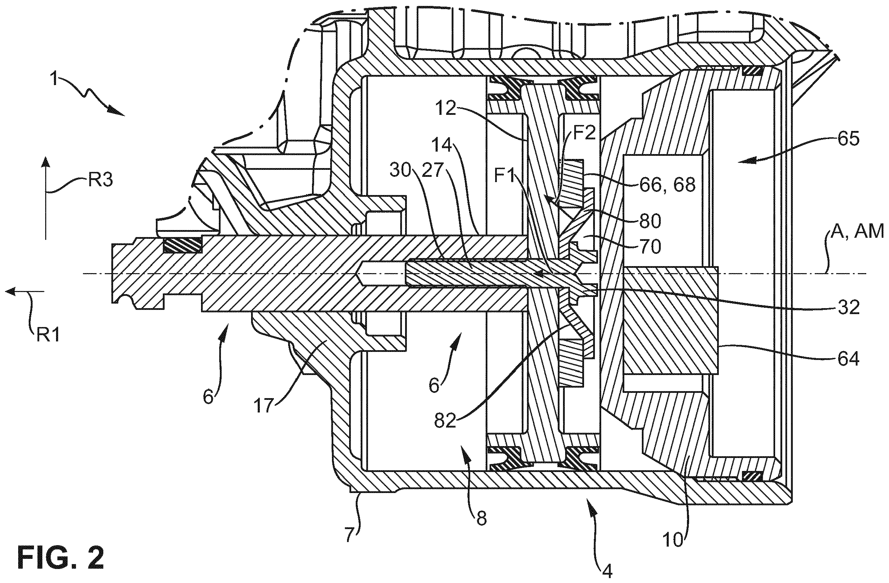

After insertion of the pneumatic piston 6, the pneumatic chamber 8 is closed by the cylinder head 10. The cylinder head 10 comprises a second external thread 44 corresponding to a second internal thread 46 of the cylinder body 7. For sealing the first volume V1, a first sealing element 48 is arranged in a sealing groove 50 of the cylinder head 10. In the embodiments of Figures 1 and 2 the cylinder head 10 is rotationally symmetrical and the sealing element 48 is formed as an O-ring.

For sealing the volume V1, the piston head 12 comprises two lip seals 52, 54. The lip seals 52, 54 are oriented in opposite directions. A leg 52.1 of a first lip seal 52 extends in the positive stroke direction R1 while a leg 54.1 of a second lip seal 54 extends in the negative stroke direction R2. The legs 52.1, 54.1 abut the inner wall 22 of the cylinder body 7 and ensure sealing of the first volume V1. For receiving the first lip seal 52 and the second lip seal 54, the cylinder head 14 has a T-shaped cross section. An outer peripheral surface 57 of the piston head 12 is continuous and comprises no cavities. A radial projection 56 defining the maximum outer diameter D1 of the piston head 12 projects beyond seal faces 58, 60 of the piston head 12. The lip seals abut the seal faces 58, 60 as well as the radial projection 56. The seal faces 58, 60 prevent deformation of the lip seals 52, 54 in a radial direction R3 perpendicular to the central axis A while the radial projection 56 prevents relative movement of the lip seals 52, 54 in the positive stroke direction R1 and/or the negative stroke direction R2 and/or facilitates installation of the lip seals 52, 54.

A small gap (not shown) is formed between the piston head 12 and the inner face 22. For guiding the pneumatic piston 6, the piston rod 14 extends through a guide bearing 62 arranged at the bottom 18 of the cylinder body 7. The guide bearing 62 is a sliding bearing but may also be formed as a rolling bearing. Alternatively or additionally, the piston head 12 may also contact the inner face 22 for guiding the pneumatic piston 6.

For detecting a relative position of the pneumatic piston 6 to the pneumatic cylinder 4, in particular a position of the pneumatic piston 6 along the central axis A, the pneumatic actuator 1 comprises a magnetic position sensor 64 and a magnet 66 cooperating with the magnetic position sensor 64. The position sensor 64 is adapted to detect the magnet 66. The position sensor is arranged on an outer portion 65 of the cylinder head 10. Preferably, the position sensor 64 provides a sensor signal corresponding to a distance L between the position sensor 64 and the magnet 66. A sensor axis AS along which the distance L can be detected by the sensor, is parallel to the central axis A of the pneumatic chamber 8. Thereby the signal is directly proportional to the distance L and can be used to determine a position of the pneumatic piston 6 relative to the pneumatic cylinder 4 without complex calculations.

The magnet 66 is attached to the first front face 40 of the piston head 12 and rotationally symmetrical to the central axis A. By attaching the magnet 66 to the first front face 40 facing the cylinder head 10, the distance L between the sensor 64 and the magnet 66 is minimized. The magnet 66 is a ring magnet 68 having a central orifice 70. The central orifice defines a central magnet axis AM that is coaxial to the central axis A. The ring magnet 68 is rotationally symmetrical with regard to the central axis A. Hence, a relative position of the ring magnet 68 with regard to the position sensor 64 arranged on the cylinder head 10 is the same for every angular orientation of the pneumatic piston 6. For example, the pneumatic piston 6 may be rotated around the central axis A by 90° without changing the relative position of the ring magnet 66 to the position sensor 64. Hence, a signal representing the distance L does not change when the pneumatic piston 6 is rotated around the central axis A. Therefore, during assembly an angular orientation of the pneumatic piston 6 with regard to the pneumatic cylinder has no influence on the functionality of the position sensor 64. Moreover, the piston rod 14 may be rotationally symmetrical and no alignment elements are needed to prevent rotation of the piston rod 14 during operation of the pneumatic actuator 1. The connection member 27 extends through the central orifice 70 of the ring magnet 68. The ring magnet 68 can therefore be fixed to the piston head 12 prior to attaching the piston head 12 to the piston rod 14. A point symmetry of the magnet 66 with regard to the central axis can be reached easily and proper alignment is facilitated.

In the embodiment of Figure 1, the ring magnet 68 is glued to the first front face 40. Particularly the ring magnet 68 is received in a mounting recess 72 of the piston head 12. The magnet 66 is protected from damages by the mounting recess 72. In this embodiment a mounting recess diameter D3 defined by a radial inner recess surface 74 is larger than an outer ring diameter D4 of the ring magnet 68. Hence, enough space for receiving the magnet 66 within the mounting recess 72 is provided. However an inner geometry of the mounting recess 72, in this embodiment the mounting recess diameter D3, may substantially correspond to an outer geometry of the magnet 66, in this embodiment the outer ring diameter D4. This may further facilitate correct alignment of the magnet 66 with regard to the piston head 12. The outer ring diameter D4 may be identical to the mounting recess diameter D3.

The cylinder head 10 comprises a sensor recess 76 and the position sensor 64 is received in the sensor recess 76. By arranging, the sensor 64 in the sensor recess 76 the distance L between the magnet 66 and the magnetic position sensor 64 is minimized. Moreover, the position sensor 64 is fully received in the sensor recess 76 that in this embodiment is a stepped recess. For further protecting the sensor 64, the sensor recess 76 may be closed from the first side 9 by a lid, cap or cover (not shown). The sensor axis AS is spaced from the central axis A. However, the central axis A and the sensor axis AS may also be congruent and/or the sensor 64 may be rotationally symmetrically arranged with regard to the central axis A. In this embodiment and preferably, the cylinder head 10 is substantially wedge-shaped. The wedge points in the positive stroke direction R1. Thereby a distance between the magnet 66 and the magnetic position sensor 64 is decreased. For a wedge-shaped cylinder head 10 at a constant distance L, the first volume V1 defined between the piston head 12, inner wall 22 and the cylinder head 10 is larger than it would be for a generally cylindrical shaped cylinder head 10. A larger first volume V1 allows for a more precise actuation of the pneumatic piston 6 and the functional element 2 respectively. Moreover, a wedge-shape is structurally stable and prevents deformation of the cylinder head 10 when pressure p1 is applied to the first volume V1. Therefore, a material thickness T1 of a sensor recess ground 78 of the sensor recess 76 can be reduced without sacrificing stability of the cylinder head 10. An influence of the cylinder head 10 on the detection of the position of the pneumatic piston 6 is decreased and the position sensor 64 can provide a stronger and/or more accurate signal.

Figure 2 shows a second embodiment of a pneumatic actuator 1. The same reference numerals are applied to corresponding components and reference is made to the description of the first embodiment of a pneumatic actuator 1.

In the second embodiment, the magnet 66 is attached to the piston head 12 of the pneumatic piston 6 by means of the connection member 27. As for the first embodiment, the connection member 27 comprises a screw 28. Furthermore, the connection member 27 comprises a washer 80 that is provided between the screw head 32 and the ring magnet 68. However, the screw head 32 may also directly abut the ring magnet 68. The washer 80 is cup shaped having an angled surface 82 abutting the ring magnet 68. By providing the angled surface 82, the point symmetrical arrangement of the magnet 68 with regard to the central axis A is facilitated. When the ring connection member 27 is fastened a fixing force F1 is provided along the central axis A in the positive stroke direction R1. Since the angled surface 82 abutting the magnet 64 is angled with regard to the central axis A, a second force F2 transmitted to the ring magnet 68 via the washer 80 is angled as well. The second force F2 has an axial component in the positive stroke direction R1 as well as a radial component in the radial direction R3. If the radial magnet 68 is misaligned with regard to the central axis A the radial component of the second force F2 moves the ring magnet 68 until the central orifice 70 is centered with regard to the central axis A and the magnet axis AM is coaxial with the central axis A. Providing the preferred washer 80 having an angled surface 82 thereby allows for an automatic alignment of the magnet 66 with regard to the central axis A upon fastening of the connection member 27.

Figure 3 shows a commercial vehicle 200 having a motor 202, a gearbox 100 a clutch 204 and a drive shaft 206 connecting the motor 202 to the clutch 204 and the gearbox 100. The pneumatic actuator 1 is arranged in the interior 104 of the gearbox 100. The piston shaft 14 protrudes from the pneumatic cylinder 4 and is connected to a functional element 2. In this embodiment, the functional element 2 is a shifting fork 106 of the gear box 100. Using the shifting fork 106, first gear wheels 108 of the gearbox 100 can be actuated and moved in the positive stroke direction R1 or the negative stroke direction R2. In Figure 3, the pneumatic piston 6 is in an outmost position and a larger first gear wheel 108.1 engages a smaller second gear wheel 110.1 of a driven shaft 112. By applying a second pressure p2 to the first volume V1, that is smaller than the ambient pressure pₐ of the interior 104 of the gearbox 100, the pneumatic piston 6 can be moved in the negative stroke direction R2. The shifting fork 106 also moves in the negative stroke direction R2. The shifting fork 106 slides the first gear wheels 108 along the shaft 112 and thereby the larger first gear wheel 108.1 is disengaged from the smaller second gear wheel 110.1 and a smaller first gear wheel 108.2 is brought into contact with a larger second gear wheel 110.2. Thereby a gear of the gearbox 100 is changed upon actuation of the pneumatic actuator 1.

The magnetic positon sensor 64 detects a position of the magnet 66 and provides a corresponding position signal S via cable 114 to a controller 116 of the vehicle 100. Since the position of the pneumatic piston 6 relative to the pneumatic cylinder 4 corresponds to the position of the functional element 2, the position signal S can be used to automatically control the gearbox 100.

The pneumatic actuator 1 is arranged in an interior 104 of the gearbox 100 and neither the piston shaft 14 nor the shifting fork 106 penetrates the housing 102 of the gearbox 100. Sealing of the gearbox 100 is thereby facilitated and leakage of oil 118 contained in the gearbox 100 is effectively prevented. The cylinder body 7 is integrally formed with the housing 102 of the gearbox 100. For example, the whole gearbox housing 102 including the cylinder body 7 can be casted in one piece.

### List of reference signs:

- 1: pneumatic actuator
- 2: functional element
- 4: pneumatic cylinder
- 6: pneumatic piston
- 7: piston body
- 8: pneumatic chamber
- 9: first side
- 10: cylinder head
- 12: piston head
- 14: piston rod
- 15: cylinder orifice
- 16: second side
- 17: channel
- 18: bottom
- 20: head opening
- 22: inner wall
- 24: first end of piston rod
- 26: groove
- 27: connection member
- 28: screw
- 30: screw shaft
- 32: screw head
- 34: external thread
- 36: internal thread
- 38: bore
- 40: first front face
- 42: second front face
- 44: second external thread
- 46: second internal thread
- 48: first sealing element
- 50: sealing groove
- 52: first lip seal
- 52.1: leg first lip seal
- 54: second lip seal
- 54.1: leg second lip seal
- 56: radial projection
- 57: outer peripheral surface of the piston head
- 58: seal face
- 60: seal face
- 62: guide bearing
- 64: magnetic position sensor
- 65: outer portion of the cylinder head
- 66: magnet
- 68: ring magnet
- 70: central orifice
- 72: mounting recess
- 74: inner recess surface
- 76: sensor recess
- 78: sensor recess ground
- 80: washer
- 82: angled surface
- 100: gearbox
- 102: housing
- 104: interior of the gearbox
- 106: shifting fork
- 108: first gear wheels
- 108.1: larger first gear wheel
- 108.2: smaller first gear wheel
- 110: second gear wheels
- 110.1: smaller second gear wheel
- 110.2: larger second gear wheel
- 112: driven shaft
- 114: cable
- 116: controller
- 118: oil
- 200: vehicle
- 202: motor
- 204: clutch
- 206: drive shaft
- A: central axis
- AM: central magnet axis
- AS: main sensor axis
- D1: maximum outer diameter piston head
- D2: inner diameter piston orifice
- D3: recess diameter
- D4: outer ring diameter
- F1: first force
- F2: second force
- L: distance
- p1: first pressure
- p2: second pressure
- pₐ: ambient pressure
- R1: positive stroke direction
- R2: negative stroke direction
- R3: radial direction
- S: signal
- T1: material thickness cylinder head
- V1: first volume
- V2: second volume

## Claims

1. A pneumatic actuator (1) for actuating a functional element (2), in particular a functional element (2) of a gearbox (100) of a commercial vehicle (200), comprising:
a pneumatic cylinder (4), the pneumatic cylinder (4) comprising
a cylinder body (7) defining a pneumatic chamber (8) having a central axis (A), and
a cylinder head (10) closing the pneumatic chamber (8);
a pneumatic piston (6) for actuating the functional element (2), the pneumatic piston (6) comprising
a piston head (12), and
a piston rod (14) for connecting the piston head (12) to the functional element (2),
wherein the piston head (12) is received in the pneumatic chamber (18) slidable along said central axis (A);
a magnetic position sensor (64) for detecting a relative position of the pneumatic piston (6) to the pneumatic cylinder (4); and
a magnet (66) attached to the pneumatic piston (6) for cooperation with the magnetic position sensor (64),
**characterized in that** the magnet (66) is point symmetrical to the central axis (A).

2. The pneumatic actuator (1) according to claim 1, wherein the magnet (66) is rotationally symmetrical.

3. The pneumatic actuator (1) according to claim 1 or 2, wherein the piston head (12) comprises a first front face (40) and a second front face (42) and wherein the magnet (66) is attached to the first front face (40) of the piston head (12).

4. The pneumatic actuator (1) according to claim 3, wherein the piston head (12) comprises a mounting recess (72) in the first front face (40) and wherein the magnet (66) is at least partially received in the mounting recess (72).

5. The pneumatic actuator (1) according to any of the preceding claims, wherein the magnet (66) is a ring magnet (68) having a central orifice (70), wherein a central magnet axis (AM) defined by the central orifice (70) is coaxial to the central axis (A) of the pneumatic chamber (8).

6. The pneumatic actuator (1) according to claim 5, wherein a connection member (27) connecting the piston head (12) to the piston rod (14) extends through the central orifice (70) of the ring magnet (68), wherein the ring magnet (68) is attached to the piston head (12) by means of the connection member (27).

7. The pneumatic actuator (1) according to any of the preceding claims, wherein the magnet (66) is glued to the piston head (12).

8. The pneumatic actuator (1) according to any of the preceding claims, wherein a main sensor axis (AS) of the position sensor (64) is parallel to the central axis (A) of the pneumatic chamber (8).

9. The pneumatic actuator (1) according to any of the preceding claims, wherein the position sensor (64) is arranged on an outer portion (65) of the cylinder head (12) opposite the pneumatic chamber (8), wherein the outer portion (65) of the cylinder head (10) comprises a sensor recess (76) and wherein the position sensor (64) is at least partially received in the sensor recess (76).

10. The pneumatic actuator according to any of the above claims, wherein the magnet has a "remanent" flux density within the range of 1300mT and 1400mT, and more preferably in the range of 1310 mT and 1350 mT at a room temperature of about 20 degrees Celsius.

11. The pneumatic actuator (1) according to any of the preceding claims, wherein an outer peripheral surface (57) of the piston head (12) is continuous.

12. The pneumatic actuator (1) according to any of the preceding claims, wherein the piston rod (14) is rotationally symmetrical.

13. The pneumatic actuator of any one of the above claims, wherein the magnet sis made of a Neodym, Bismanol and/or AlNiCo-magnet, wherein the magnet preferably has a magnetic flux density within the range of 1000 mT to 2000 mT, more preferably 1200 mT to 1500 mT, even more preferably 1300 mT to 1400 mT.

14. A gearbox (100), in particular for a commercial vehicle (200), comprising a pneumatic actuator (1) according to any of the preceding claims 1 to 13.

15. A commercial vehicle (200) comprising a gearbox (100) according to claim 14.
